# EUROPEAN PATENT APPLICATION

(11) **EP 3 496 196 A1**
(43) Date of publication of application: **12.06.2019**
(21) Application number: 17836708.2
(22) Date of filing: 12.07.2017
(51) Int. Cl.: H01M 8/0273, H01M 8/0276, H01M 8/0284, H01M 8/0206, F16J 15/12

(54) **GASKET**

(30) Priority: 02.08.2016 JP 2016151719
(71) Applicant: NOK Corporation, Minato-ku Tokyo 105-8585 (JP)
(72) Inventor: SHIMAZOE Toshihiro, Kikugawa-shi Shizuoka 437-1507 (JP)
(74) Representative: TBK
(86) International application number: PCT/JP2017/025352
(87) International publication number: WO 2018/025601

(57) **Abstract**

This invention provides a gasket in which the insulation properties of a plate exposed within a recessed portion are maintained and the generation of rust or the like on the plate exposed within the recessed portion is suppressed, whereby functions and the component life of the plate are maintained over a long period of time. In order to achieve the object, a gasket has a plate, a covering portion containing a rubber-like elastic body covering a peripheral portion of the plate, and a seal lip provided on the plane of the covering portion, in which a recessed portion which is a plate holding mark in gasket molding is formed on the plane of the covering portion and on the outer peripheral side of the seal lip and in which a second seal lip is provided on the plane of the covering portion and on the further outer peripheral side of the recessed portion. The plate is a fuel cell separator and the second seal lip is provided as a seal lip for separator insulation.

## Description

### Technical Field

The present invention relates to a gasket relating to a sealing technique and more specifically relates to a gasket of a structure in which a covering portion containing a rubber-like elastic body and a seal lip are provided on a peripheral portion of a plate. The gasket of the present invention is used in the field of fuel cell or used in the fields of general industrial device and the like in addition thereto, for example.

### Background Art

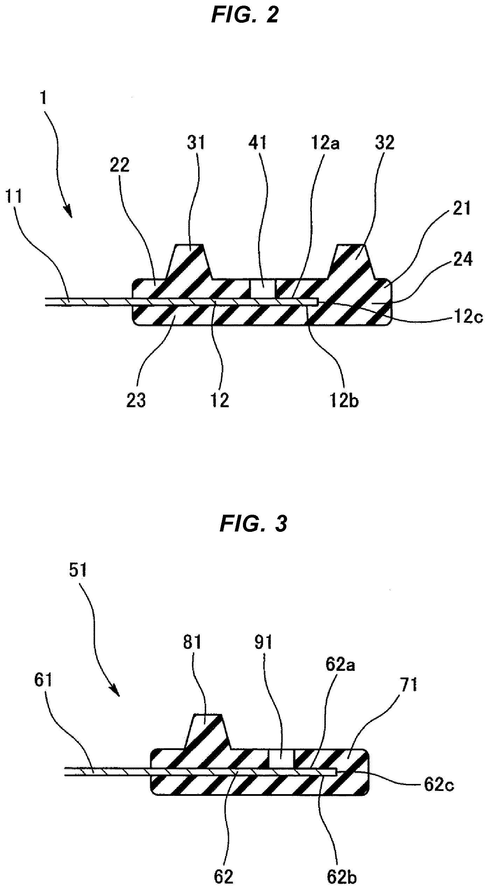

Heretofore, a gasket 51 is known which has a fuel cell separator 61 as one kind of a plate and in which, in order to secure the insulation properties of the separator 61 and the sealability as a gasket, both surfaces 62a and 62b in the thickness direction and an outer peripheral thickness surface 62c of a peripheral portion 62 of the separator 61 are covered with a covering portion 71 containing a rubber-like elastic body and a seal lip 81 is integrally provided on the plane of the covering portion 71 as illustrated in FIG. 3.

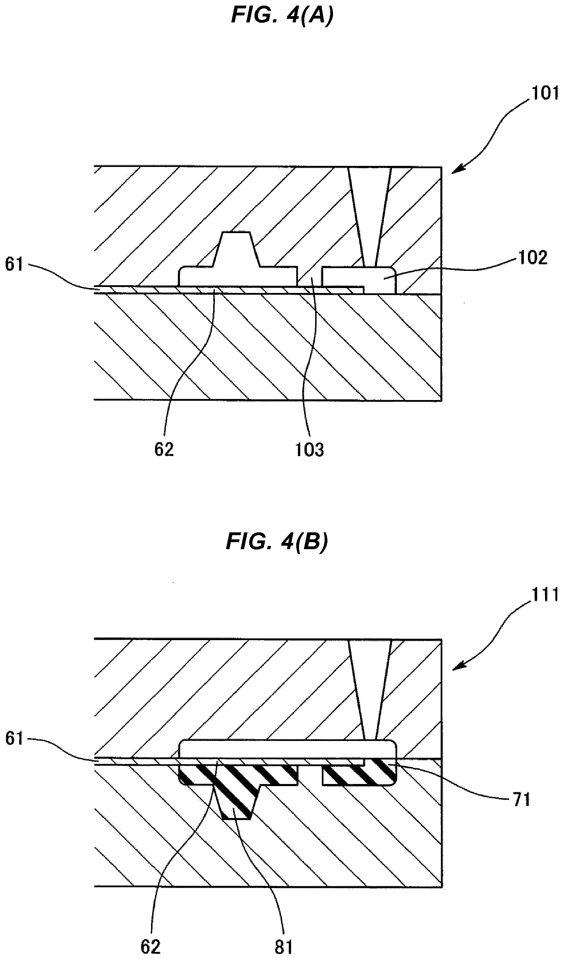

When manufacturing the gasket 51 of the above-described configuration by an injection molding method, a half body on one side in the thickness direction of the covering portion 71 and the seal lip 81 are molded using a first mold 101 in a state where the separator 61 is inserted as illustrated in FIG. 4(A), and then a half body on the other side in the thickness direction of the covering portion 71 is molded using a second mold 111 as illustrated in FIG. 4(B). In a cavity 102 of the first mold 101, a pin-shaped separator holding portion 103 pressing down a peripheral portion 62 of the separator 61 is provided so that the peripheral portion 62 of the separator 61 is not deformed (there is a possibility that the peripheral portion 62 is deformed to float from a lower mold) even when receiving injection pressure.

Therefore, a recessed portion 91 is formed as a mark where the pin-shaped separator holding portion 103 is removed is formed in the gasket 51 after the molding as illustrated in FIG. 3 and the recessed portion 91 is located and formed on the plane of the covering portion 71 and on the outer peripheral side (right side in the figure) of the seal lip 81.

### Prior Art Documents

### Patent Documents

Patent Document 1: Japanese Unexamined Patent Application Publication No. 2005-166576

### Summary of Invention

### Problem to be Solved by the Invention

There is room for improvement in the above-described conventional technique as follows.

More specifically, in the above-described conventional technique, the recessed portion 91 is located and formed on the plane of the covering portion 71 and on the outer peripheral side of the seal lip 81 as described above. In the recessed portion 91, the surface of the separator 61 is not covered with the covering portion 71 and exposed, and thus is exposed to the outside atmosphere when assembled as a fuel cell stack. Therefore, a further improvement of the performance of the insulation properties required for the separator 61 has been demanded.

Moreover, rust or the like is generated on the surface of the plate, such as the separator 61, exposed within the recessed portion 91 in some cases. Also in such a case, a countermeasure has been required in some cases.

In view of the above-described points, it is an object of the present invention to provide a gasket in which a covering portion containing a rubber-like elastic body and a seal lip are provided in a peripheral portion of a plate and a recessed portion which is a plate holding mark in gasket molding is formed on the plane of the covering portion and on the outer peripheral side of the seal lip and in which the insulation properties of the plate exposed within the recessed portion are secured or the generation of rust or the like on the plate exposed within the recessed portion is suppressed, whereby functions and the component life of the plate can be maintained over a long period of time.

### Means for Solving the Problem

In order to achieve the above-described object, a gasket of the present invention has a plate, a covering portion containing a rubber-like elastic body covering a peripheral portion of the plate, and a seal lip provided on the plane of the covering portion in which a recessed portion which is a plate holding mark in gasket molding is formed on the plane of the covering portion and on the outer peripheral side of the seal lip and in which a second seal lip is provided on the plane of the covering portion and on the further outer peripheral side of the recessed portion. The plate is, for example, a fuel cell separator. In this case, the second seal lip is provided as a seal lip for separator insulation.

In the gasket of the present invention having the above-described configuration, the second seal lip is integrally provided on the plane of the covering portion and on the outer peripheral side of the recessed portion, and therefore the plate exposed within the recessed portion and the outside atmosphere can be isolated from each other by the seal action exhibited by the second seal lip.

### Effect of the Invention

Therefore, the present invention can provide a gasket in which the insulation properties of a plate exposed within a recessed portion are secured and the generation of rust or the like on the plate exposed within the recessed portion is suppressed, whereby functions and the component life of the plate are maintained over a long period of time.

### Brief Description of Drawings

FIG. 1 is a plan view of a gasket according to an embodiment of the present invention.
FIG. 2 is a cross-sectional view of a principal portion of the gasket and an enlarged cross sectional view along the C-C line in Fig. 1.
FIG. 3 is a cross-sectional view of a principal portion of a gasket according to a conventional example.
FIGs. 4(A) and 4(B) are explanatory views illustrating molding processes of the gasket.

### Description of Embodiments

The present invention includes the following embodiments.
(1) A fuel cell gasket in which a seal lip for outer periphery insulation is provided in the outermost periphery of a separator which is a fuel cell separator having an outer periphery insulating function and a method for manufacturing the same.
(2) The fuel cell gasket in which the seal lip for outer periphery insulation is disposed on the outer side relative to a mold pressing portion (metal exposed portion) in rubber molding and a method for manufacturing the same.
(3) The seal lip for outer periphery insulation is disposed on the entire periphery on the outer side relative to a partial mold pressing portion. This makes it possible to secure an insulating function of the separator without precoating or after-coating.
(4) According to the above-described configuration, the gasket having an insulating function can be molded without increasing a process for precoating or after-coating by a simple method.
(5) Moreover, the insulation properties inside the seal lip for outer periphery insulation are secured by the seal lip for outer periphery insulation, and therefore no problems occur even when voids, foreign substances, metal exposure, and the like which cause insulation failure are present inside the seal lip for outer periphery insulation, and thus the incidence of nonconformity of the insulation failure can be reduced.

### Embodiment

Next, an embodiment of the present invention is described according to the drawings.

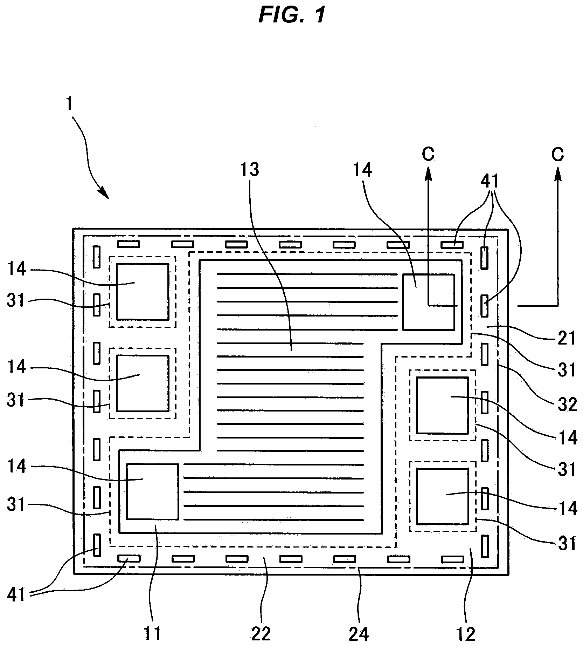

FIG. 1 illustrates the plane of a whole gasket 1 according to an embodiment of the present invention. FIG. 2 illustrates an enlarged cross-sectional view along the C-C line thereof. The gasket 1 according to this embodiment is used as a fuel cell gasket.

The gasket 1 has a fuel cell separator 11 as one kind of a plate, in which, in order to secure the insulation properties of the separator 11 and the sealability as a gasket, both surfaces 12a and 12b in the thickness direction and an outer peripheral thickness surface 12c of a peripheral portion 12 of the separator 11 are covered with a covering portion 21 containing a rubber-like elastic body and seal lips 31 are integrally provided on the plane of the covering portion 21.

The separator 11 is formed in a planar rectangular shape by a thin metal plate having conductivity and the like. Therefore, there is a possibility that, when assembled as a fuel cell stack, the peripheral portion 12 of the separator 11 is exposed to the outside of the stack, so that the insulation properties (electrical insulation properties) are impaired. In order to prevent the possibility, the peripheral portion 12 of the separator 11 is covered with the covering portion 21 containing a nonconductive rubber-like elastic body over the entire periphery.

Moreover, fluids, such as a reaction gas and a refrigerant, flow through a flow passage region 13 set in the center of the plane in the separator 11, and therefore the seal lip 31 is provided on the entire periphery of the peripheral portion 12 of the separator 11, so that the fluids do not leak to the outside of the stack. Moreover, a required number of hole portions 14 for manifolds are provided together with the flow passage region 13 on the plane of the separator 11, and therefore the seal lips 31 are also provided in the surroundings of the hole portions 14 in order to isolate the hole portions 14 and the flow passage region 13 from each other. In FIG. 1, the plane arrangement of the seal lips 31 is indicated by the dotted line.

The covering portion 21 integrally has a first covering portion 22 covering a surface 12a on one side (upward in FIG. 2) in the thickness direction of the peripheral portion 12 of the separator 11, a second covering portion 23 covering a surface 12b on the other side (downward in FIG. 2) in the thickness direction of the peripheral portion 12 of the separator 11, and a third covering portion 24 covering the outer peripheral thickness surface 12c of the peripheral portion 12 of the separator 11, in which the first to third covering portions 22, 23, and 24 are formed in a plate shape having a thickness larger than the thickness of the separator 11 in a state of embedding the peripheral portion 12 of the separator 11 therein as illustrated in the figure.

The seal lips 31 are integrally provided on the plane of the covering portion 21 and on the plane of the first covering portion 22, i.e., provided at positions where the seal lips 31 are overlapped with the peripheral portion 12 of the separator 11 on the plane. The seal lips 31 are formed into a trapezoidal cross section and may be formed into the other cross-sectional shapes, such as a triangular cross section and an arc-shaped (semicircular) cross section. The seal lips 31 exhibit the seal action by being brought into close contact with a laminated mating component, when assembled as a fuel cell stack.

When manufacturing the gasket 1 of the above-described configuration by an injection molding method, half bodies (first and third covering portions 22 and 24) on one side in the thickness direction of the covering portion 21 and the seal lips 31 are molded using a first mold in a state where the separator 11 is inserted, and then half bodies (second and third covering portions 23 and 24) on the other side in the thickness direction of the covering portion 21 are molded using a second mold as described above. In a cavity of the first mold, a pin-shaped separator holding portion pressing down the peripheral portion 12 of the separator 11 is provided so that the peripheral portion 12 of the separator 11 is not deformed (there is a possibility that the peripheral portion 12 is deformed to float from a lower mold) even when receiving injection pressure.

Therefore, in the gasket 1 after the molding, a recessed portion 41 is formed as a mark where the pin-shaped separator holding portion is removed. The recessed portion 41 is located and formed on the plane of the covering portion 21 and on the outer peripheral side (right side in the figure) of the seal lip 31 as illustrated in FIG. 2.

When the recessed portion 41 is located and formed on the plane of the covering portion 21 and on the outer peripheral side of the seal lip 31, the surface of the separator 11 is not covered with the covering portion 21 and exposed within the recessed portion 41, and thus is exposed to the outside atmosphere when assembled as a fuel cell stack. Therefore, a further improvement of the performance of the insulation properties required for the separator 11 has been demanded.

As illustrated in FIG. 1, two or more of (large number) the recessed portions 41 are provided in one row at predetermined intervals along the peripheral portion 12 of the separator 11.

Then, in the embodiment of the present invention, a second seal lip 32 is provided on the plane of the covering portion 21 and on the further outer peripheral side of the recessed portion 41 as illustrated in FIG. 2, and thus the separator 11 exposed within the recessed portion 41 and the outside atmosphere are isolated from each other by the seal action exhibited by the second seal lip 32 when assembled as a fuel cell stack. In FIG. 1, the plane arrangement of the second seal lip 32 is indicated by the alternate long and short dashed lines.

The second seal lip 32 is integrally molded with the covering portion 21 and is integrally molded with the third covering portion 24 of the covering portion 21. Therefore, the second seal lip 32 is provided at a position where the second seal lip 32 is overlapped with the third covering portion 24 on the plane, i.e., provided at a position where the second seal lip 32 is not overlapped with the peripheral portion 12 of the separator 11 on the plane. The second seal lip 32 is provided over the entire periphery of the gasket 1 in parallel to the peripheral portion 12 of the separator 11.

The second seal lip 32 is formed into a trapezoidal cross section as with the seal lip 31 and may be formed into the other cross-sectional shapes, such as a triangular cross section and an arc-shaped (semicircular) cross section. The second seal lip 32 is molded into a height dimension equal to that of the seal lips 31 and may be molded into a height dimension different from that of the seal lips 31 depending on the shape or the like of a laminated mating component.

In the gasket 1 having the above-described configuration, the second seal lip 32 is integrally provided on the plane of the covering portion 21 and on the further outer peripheral side of the recessed portions 41. Therefore, metal exposed portions of the separator 11 exposed within the recessed portions 41 and the outside atmosphere can be isolated from each other by the seal action exhibited by the second seal lip 32 when assembled as a fuel cell stack.

Therefore, the insulation properties of the separator 11 exposed within the recessed portions 41 can be secured or the generation of rust or the like on the surface of the separator 11 exposed within the recessed portions 41 can be suppressed, whereby functions and the component life of the separator 11 can be maintained over a long period of time.

### Description of Reference Numerals

- 1: gasket
- 11: separator (plate)
- 12: peripheral portion
- 12a: surface on one side in thickness direction
- 12b: surface on the other side in thickness direction
- 12c: outer peripheral thickness surface
- 13: flow passage region
- 14: hole portion
- 21: covering portion
- 22: first covering portion
- 23: second covering portion
- 24: third covering portion
- 31: seal lip
- 32: second seal lip
- 41: recessed portion

## Claims

1. A gasket comprising:
a plate;
a covering portion containing a rubber-like elastic body covering a peripheral portion of the plate; and
a seal lip provided on a plane of the covering portion, wherein
a recessed portion which is a plate holding mark in gasket molding is formed on the plane of the covering portion and on an outer peripheral side of the seal lip, wherein
a second seal lip is provided on the plane of the covering portion and on a further outer peripheral side of the recessed portion.

2. The gasket according to Claim 1, wherein
the plate is a fuel cell separator, and
the second seal lip is provided as a seal lip for separator insulation.
